# EUROPEAN PATENT SPECIFICATION

(11) **EP 2 008 909 B1**
(45) Date of publication and mention of the grant of the patent: **12.05.2010**
(21) Application number: 08011331.9
(22) Date of filing: 23.06.2008
(51) Int. Cl.: B62D 1/185

(54) **Telescopic shaft for steering a vehicle and motor vehicle steering system**
Teleskopisches Rohr zum Lenken eines Fahrzeugs und Motorfahrzeug-Lenksystem
Arbre télescopique pour diriger un véhicule et système de direction d'un véhicule à moteur

(30) Priority: 25.06.2007 JP 2007166967
(43) Date of publication of application: 31.12.2008
(73) Proprietor: JTEKT Corporation, Osaka-shi Osaka 542-8502 (JP); Hiruta-Kogyo Co., Ltd., Kasaoka-shi Okayama 714-0062 (JP)
(72) Inventor: Miyawaki, Naoto, c/o JTEKT Corp., Osaka-shi, Osaka 542-8502 (JP); Yoshioka, Koji, c/o JTEKT Corp., Osaka-shi, Osaka 542-8502 (JP); Ohtsuki, Shunichi, c/o Hiruta Kogyo Co., Ltd., Okayama 714-0062 (JP)
(74) Representative: Steil, Christian

(56) References cited:
- US-A- 5 645 366
- US-B2- 6 620 050

## Description

### BACKGROUND OF THE INVENTION

### Field of the Invention

The present invention relates to a telescopic shaft for steering vehicle and a motor vehicle steering system.

### Description of Related Arts

The motor vehicle steering system comprises shaft members such as a steering shaft and an intermediate shaft for transmitting rotation of a steering member such as a steering wheel (see, for example, Documents 1 to 4).
Document 1: Japanese Unexamined Patent Publication No. 2002-539033
Document 2: U.S. Patent No.6620050
Document 3: Japanese Unexamined Patent Publication No.2006-273128
Document 4: Japanese Patent Document No.3797304

According to the above document 2 which the preamble of claim 1 is based upon, a male shaft and a female shaft of the intermediate shaft are fitted with each other in a manner to be capable of relative sliding movement in an axial direction and of torque transmission. A plurality of metal pins having a C-shaped section are interposed between the male shaft and the female shaft.

It may be contemplated to provide a smooth relative sliding movement between the male shaft and the female shaft by forming the pins from a resin, for example, to reduce sliding resistance between these shafts. In this case, the resin pins are formed by, for example, injecting a molten resin into a mold. After the resin pins are formed, inside parts of the mold which are located inside the resin pins are extracted therefrom. At this time, the inside part is extracted in a radial direction of the pin. However, the inside mold part must be forcibly extracted from the resin pin because the resin pin has the C-shaped section.

Specifically, it is required to forcibly extract the mold part from the resin pin by opening wide an aperture of the C-shaped section of the resin pin. This may plastically deform the resin pin. If the resin pin is plastically deformed and increased in diameter, the resin pin inserted between the male and female shafts causes the increase of frictional resistance between the resin pin and these shafts. This may prevent the smooth relative sliding movement between the male shaft and the female shaft.

An object of the present invention is to provide a telescopic shaft for steering vehicle and a motor vehicle steering system which are adapted for the smooth relative sliding movement between shafts fitted with each other and adapted to ensure a rigid feeling of the circumferential connection of these shafts.

### SUMMARY OF THE INVENTION

According to a preferred embodiment of the invention for achieving the above object, a telescopic shaft for steering vehicle rotated according to the steering of a steering member includes: an inner shaft and a tubular outer shaft fitted with each other in a manner to be capable of relatively sliding in an axial direction and of transmitting a torque; at least three pairs of axial grooves formed on an outer periphery of the inner shaft and an inner periphery of the outer shaft and extending in the axial direction to be opposed to each other; a rigid coupling element for rigidly connecting the inner shaft and the outer shaft in a circumferential direction of the inner shaft when a relative phase of the inner shaft and the outer shaft with respect to the circumferential direction exceeds a predetermined range; and a plurality of elongate resin rods as elastic coupling elements for elastically connecting the inner shaft and the outer shaft in the circumferential direction when the relative phase is in the predetermined range. Each of the plural resin rods is interposed between the mutually corresponding axial grooves of the inner shaft and the outer shaft. Each of the plural resin rods includes a groove extending in a longitudinal direction of the plural resin rods. A section of the groove has a U shape opening toward the outside in a radial direction of the inner shaft.

According to the embodiment, the groove of each of the plural resin rods has the section shaped like U opening toward the outside in the radial direction of the inner shaft. Hence, when the individual resin rods is formed, after the resin rod is formed by injecting a molten resin in a mold, a mold part which is located inside the groove can be smoothly extracted from the resin rod in the radial direction thereof. This eliminates the need for forcibly extracting the mold part from the resin rod. Therefore, the resin rod being released from the mold is prevented from undergoing plastic deformation to expand radially. As a result, the increase of frictional resistance between the inner shaft and the outer shaft through the resin rods is prevented. Thus, the smooth relative sliding movement is accomplished by the inner shaft and the outer shaft through the resin rods having a lower frictional resistance than metal. In addition, gaps between the inner shaft and the outer shaft in the circumferential direction of the inner shaft can be filled by the resin rods. This is effective to increase the rigidity of the connection of these shafts through the resin rods in the circumferential direction of the inner shaft even when the relative phase of the inner shaft and the outer shaft is in the predetermined range. Therefore, the inner and outer shafts can be brought into rotation in synchronism without delay of rotation transmission between these shafts. This ensures the rigid feeling of the connection of the inner shaft and the outer shaft in the circumferential direction of the inner shaft, so that a good steering feeling is provided.

### BRIEF DESCRIPTION OF THE DRAWINGS

FIG.1 is a schematic diagram showing a general structure of a motor vehicle steering system including a telescopic shaft for steering vehicle according to one embodiment of the invention;
FIG.2 is an exploded perspective view showing a principal part of a steering shaft;
FIG.3 is a sectional view of the principal part of the steering shaft;
FIG.4 is a sectional view taken on the line IV-IV in FIG.3;
FIG.5 is an enlarged fragmentary view of FIG.4;
FIG.6 is an enlarged view of a principal part of FIG.5;
FIG.7 is an enlarged sectional view of a resin rod;
FIG.8 is a sectional view showing a principal part where an inner shaft and an outer shaft are rigidly connected in a circumferential direction;
FIG.9 is a graph showing a relation between the steering angle and the torque exerted on the steering shaft;
FIG.10 is a perspective view showing a principal part of another embodiment of the invention;
FIG.11 is a sectional view showing the principal part where a resin body of FIG.10 is interposed between the inner shaft and the outer shaft;
FIG. 12 is a sectional view taken on the line XII-XII of FIG.11;
FIG.13 is a schematic diagram of the principal part for explaining an action in a case where the resin body of FIG.10 is used;
FIG.14 is a graph showing a relation between the steering angle of a steering member and the torque exerted on the steering member in the case where the resin body of FIG.10 is used; and
FIG. 15 is a sectional view showing a principal part of still another embodiment of the invention.

### DETAILED DESCRIPTION OF THE PREFERRED EMBODIMENTS

Preferred embodiments of the invention will be described with reference to the accompanying drawings.

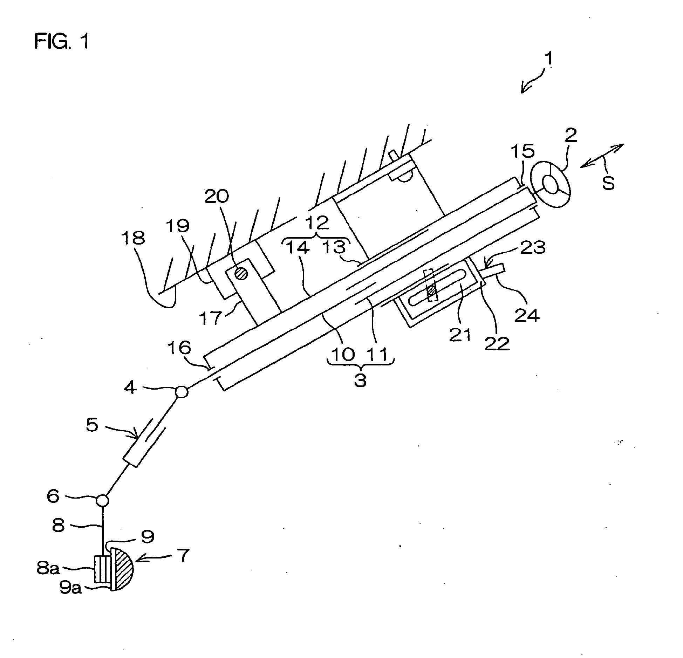

FIG. 1 is a schematic diagram showing a general structure of a motor vehicle steering system 1 comprising a telescopic shaft for steering vehicle according to one embodiment of the invention. Referring to FIG.1, the motor vehicle steering system 1 has a tilt adjustment function to adjust a position of a steering member 2 such as a steering wheel generally vertically relative to a driver. Further, the motor vehicle steering system 1 also has a telescopic adjustment function to adjust the position of the steering member 2 generally forward and backward relative to the driver.

The motor vehicle steering system 1 comprises the steering member 2 and a steering shaft 3 as a telescopic shaft for steering vehicle. The steering shaft 3 is connected to the steering member 2 and is rotated according to a steering operation of the steering member 2.

The steering member 2 is attached to one end of the steering shaft 3. The steering shaft 3 is disposed in an inclined manner so that the one end to which the steering member 2 is attached is located on an upper side. The other end of the steering shaft 3 is connected to a steering mechanism 7 via a universal joint 4, an intermediate shaft 5 and a universal joint 6.

The steering mechanism 7 comprises a pinion shaft 8 and a rack shaft 9. The pinion shaft 8 is continuous with the universal joint 6. The rack shaft 9 includes rack teeth 9a meshed with a pinion 8a at one end of the pinion shaft 8. When the steering member 2 is rotated to rotate the steering shaft 3, the pinion 8a of the steering mechanism 7 exhibits a rotary movement, which is converted into a linear movement of the rack shaft 9 in a longitudinal direction. Thus, the rack shaft 9 rotates knuckle arms via unillustrated tie rods connected to the rack shaft 9, thereby steering steerable vehicle wheels.

The steering shaft 3 includes a tubular outer shaft 11 to which the steering member 2 is attached, and an inner shaft 10. The inner shaft 10 is shaped like a rod and extends in an axial direction S. Hereinafter, the axial direction S of the inner shaft 10 will be simply referred to as the axial direction S. The inner shaft 10 has one end fitted with one end of the outer shaft 11 in a manner to be capable of transmitting a torque and of relatively sliding in the axial direction S. The other end of the inner shaft 10 is connected to the universal joint 4.

The steering shaft 3 is rotatably supported by a column tube 12. The column tube 12 includes an outer tube 13 surrounding the outer shaft 11, and an inner tube 14. The inner tube 14 is fitted with the outer tube 13 in a manner to be capable of relatively sliding in the axial direction S and surrounds the inner shaft 10. The outer tube 13 rotatably supports the outer shaft 11 through a bearing 15 and is movable together with the outer shaft 11 in the axial direction S. The inner tube 14 rotatably supports the inner shaft 10 through a bearing 16 so as to inhibit the inner shaft 10 from moving relatively thereto in the axial direction S.

A first bracket 17 is fixed to the inner tube 14. The first bracket 17 is supported by a second bracket 19 through a support shaft 20. The second bracket is fixed to a vehicle body 18. The inner tube 14 is adapted to pivot about the support shaft 20.

A third bracket 21 is fixed to the outer tube 13. The third bracket 21 opposes a fourth bracket 22 fixed to the vehicle body 18. The third bracket 21 is locked to the fourth bracket 22 by means of a lock mechanism 23.
The third bracket can be unlocked by operating an operating lever 24 of the lock mechanism 23. An operation of moving the outer tube 13 and the outer shaft 11 relative to the corresponding inner tube 14 and inner shaft 10 in the axial direction S, namely a telescopic operation, is enabled by unlocking the third bracket 21. A tilt operation of pivotally moving the steering shaft 3 and the column tube 12 about the support shaft 20 is also enabled by unlocking the third bracket 21.

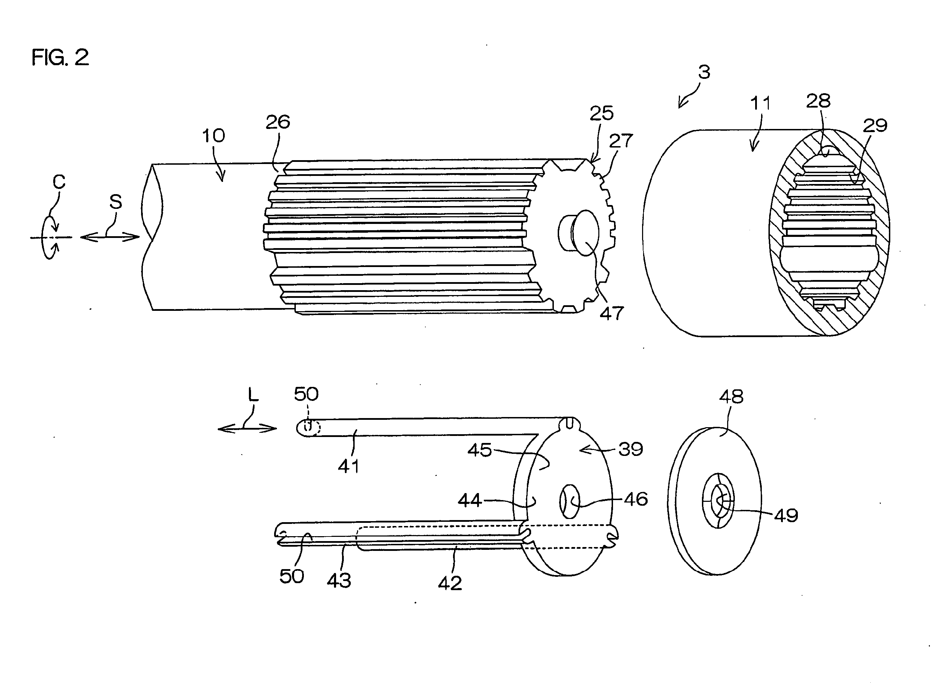

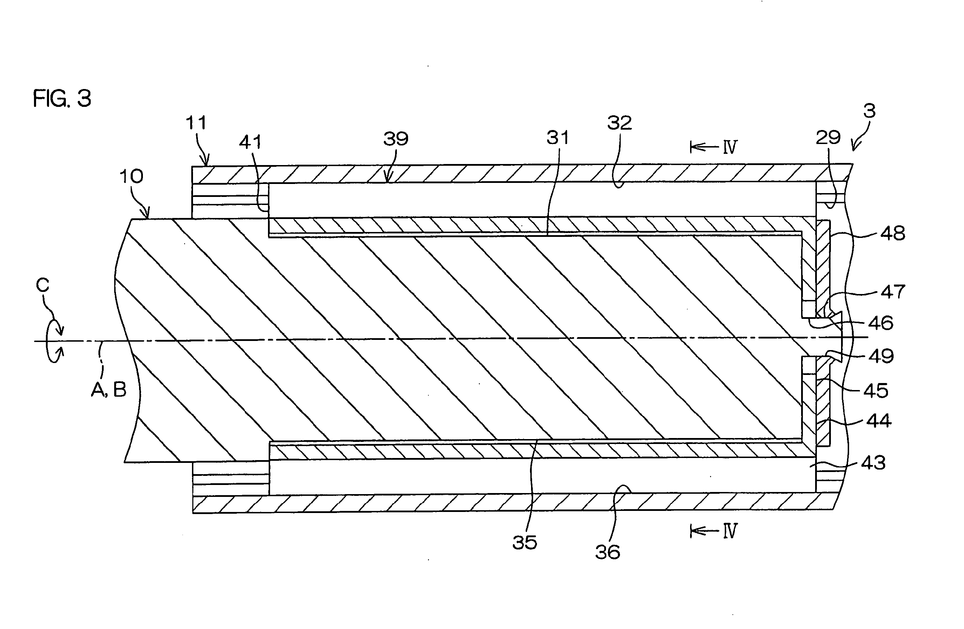

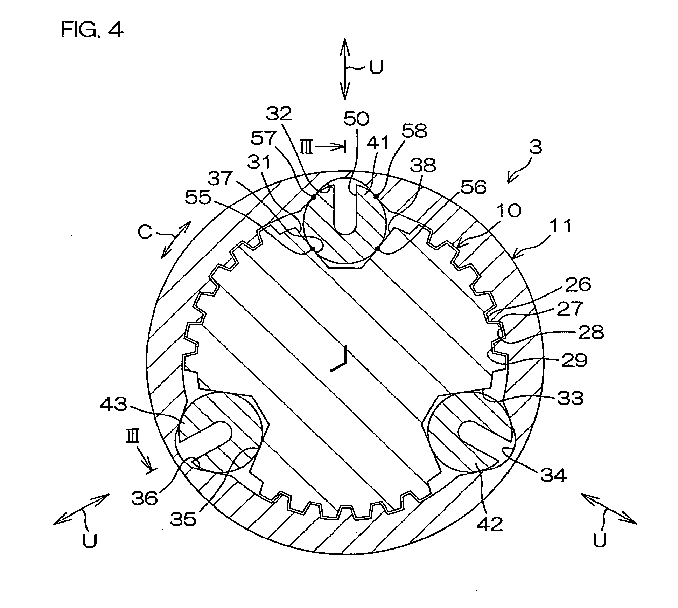

FIG.2 is an exploded perspective view showing a principal part of the steering shaft 3. FIG.3 is a sectional view of the principal part of the steering shaft 3. FIG.4 is a sectional view taken on the line IV-IV in FIG.3.

Referring to FIG. 2, the inner shaft 10 and the outer shaft 11 of the steering shaft 3 each comprise a high rigid member formed of a metal. These inner shaft 10 and outer shaft 11 are provided with a serrated coupling structure 25 as a rigid coupling element. The serrated coupling structure 25 is designed to establish a rigid connection of these shafts 10, 11 in a circumferential direction C of the inner shaft 10 when a relative phase of the inner shaft 10 and the outer shaft 11 (relative position of the inner shaft 10 against the outer shaft 11 with respect to the circumferential direction C) exceeds a predetermined range.

The serrated coupling structure 25 includes a male serration portion 27 formed on an outer periphery 26 of the one end of the inner shaft 10 and a female serration portion 29 formed on an inner periphery 28 of the one end of the outer shaft 11. These serration portions 27, 29 extend in parallel to the corresponding inner shaft 10 and outer shaft 11, respectively. The inner shaft 10 is inserted in the outer shaft 11, whereby these male serration portion 27 and female serration portion 29 can be brought into meshing engagement.

Referring to FIG.3 and FIG.4, the outer periphery 26 of the inner shaft 10 and the inner periphery 28 of the outer shaft 11 are formed with three pairs of axial grooves 31,32; 33, 34; 35,36 opposed to each other. Each of the axial grooves 31 to 36 extends in parallel to the axial direction of the corresponding inner shaft 10 or outer shaft 11.

The three axial grooves 32, 34, 36 are formed on the inner periphery 28 of the one end of the outer shaft 11 and are arranged with equal spacing in a circumferential direction of the outer shaft 11. The three axial grooves 31, 33, 35 are formed on the outer periphery 26 of the one end of the inner shaft 10 and are arranged with equal spacing in the circumferential direction C of the inner shaft 10. Each of the axial grooves 31 to 36 extends in the axial direction S.

The axial grooves 32, 34, 36 of the outer shaft 11 oppose the respectively corresponding axial grooves 31, 33, 35 of the inner shaft 10 in a radial direction U of the inner shaft 10.

The axial grooves 32, 34, 36 of the outer shaft 11 each include a smoothly curved arcuate surface. The axial grooves 31, 33, 35 of the inner shaft 10 each include a pair of wall surfaces 37, 38 which oppose each other in the circumferential direction C of the inner shaft 10. These wall surfaces 37, 38 are planar. The distance (groove width) between these wall surfaces 37, 38 is progressively decreased toward the inside in the radial direction U of the inner shaft 10.

Referring to FIG. 2 and FIG. 3, a resin body 39 formed from a synthetic resin is interposed between the inner shaft 10 and the outer shaft 11. The resin body 39 is formed in one piece and includes elongate resin rods 41, 42, 43 as plural elastic coupling elements and a connecting portion 44 connecting these resin rods 41, 42, 43.

The connecting portion 44 includes a main body 45 shaped like a disk. The main body 45 is formed with a through-hole 46. A projection 47 projected from the one end face of the inner shaft 10 is inserted through the through-hole 46. A push nut 48 is attached to the projection 47. The main body 45 of the connecting portion 44 is clamped between the push nut 48 and the one end face of the inner shaft 10 and is fixed.

The push nut 48 is shaped like a disk. The push nut 48 is raised at an edge of a through-hole 49 formed at a radial center thereof. The projection 47 is inserted through this through-hole 49. The edge of the through-hole 49 is hooked to the projection 47. A distal end of the projection 47 is extended outside in the radial direction of the inner shaft 10 and desirably has a size smaller than that of the through-hole 46.

Referring to FIG.2 and FIG.4, the respective resin rods 41, 42, 43 extend from the main body 45 of the connecting portion 44 in parallel to the axial direction S of the inner shaft 10. The resin rods 41, 42, 43 are interposed between the corresponding axial groove pairs 31,32; 33,34; 35,36. Each of the resin rods 41, 42, 43 is press-inserted between the corresponding pair of axial grooves 31,32; 33,34; 35,36 and is elastically deformed by compression.

Each of the resin rods 41, 42, 43 is formed with a groove 50. The groove 50 extends in parallel to a longitudinal direction L of the resin rod 41, 42, 43. While the grooves 50 extend through the resin rods 41, 42, 43 in the longitudinal direction L thereof, the grooves 50 may not necessarily extend through the resin rods 41, 42, 43. The grooves 50 of the resin rods 41, 42, 43 each have a U-shaped section perpendicular to the longitudinal direction L and opening toward the outside in the radial direction U of the inner shaft 10.

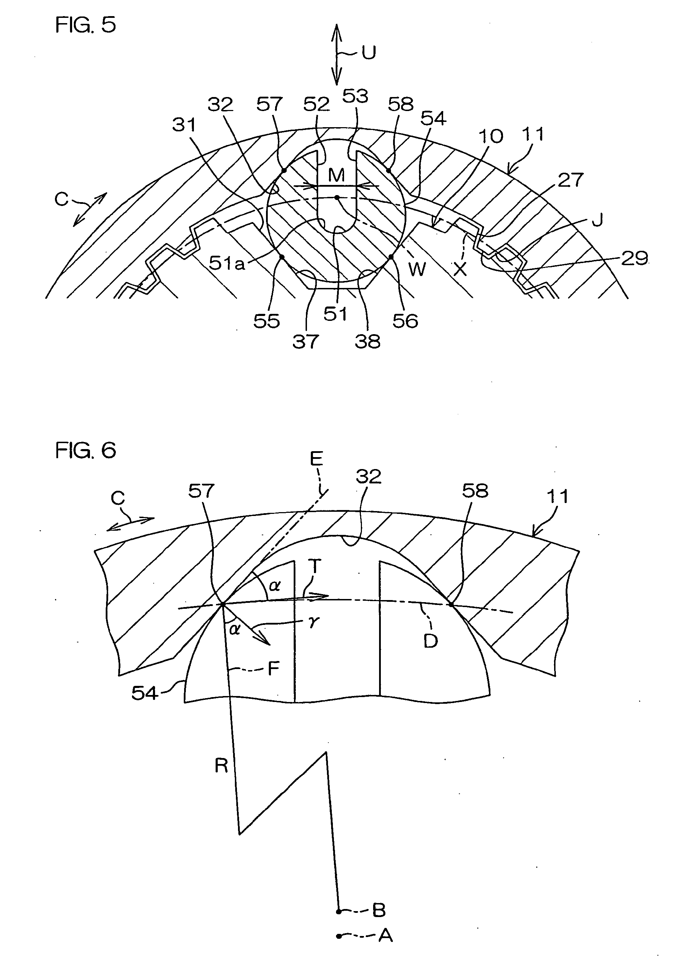

FIG.5 is an enlarged fragmentary view of FIG.4. Referring to FIG.5, a peripheral surface of each groove 50 (FIG.5 shows only the groove 50 of the resin rod 41) includes a bottom portion 51 and a pair of wall portions 52, 53. The bottom portion 51 is defined by a smoothly curved arcuate surface 51a. The paired wall portions 52, 53 are opposed to each other in parallel relation with the bottom portion 51 sandwiched therebetween. The paired wall portions 52, 53 extend generally in parallel to the radial direction U of the inner shaft 10. A gap M between the paired wall portions 52, 53 is generally constant at any point with respect to the radial direction U of the inner shaft 10.

An outer periphery of each resin rod 41, 42, 43 includes an arcuate surface 54 (FIG.5 shows only the arcuate surface 54 of the resin rod 41). A pair of ends of the arcuate surface 54 in the circumferential direction of the arcuate surface 54 are continuous with the corresponding wall portions 52, 53 of the groove 50.

Each of the arcuate surfaces 54 is in contact with each corresponding axial groove pair 31, 32; 33,34; 35,36. Thus, the arcuate surface 54 defines contact portions 55, 56, 57, 58. The contact portion 55 is in linear contact with the corresponding wall surface 37. The contact portion 56 is in linear contact with the corresponding wall surface 38. The contact portions 57, 58 are in linear contact with the corresponding axial groove 32, 34, 36.

In a section shown in FIG.6, the contact portions 57, 58 are arranged on a circle D. The circle D has its center on an axis B of the outer shaft 10. The circle D has a predetermined radius of curvature R. The contact portions 57, 58 each make contact with the corresponding axial groove 32, 34, 36 (FIG.6 shows only the axial groove 32) of the outer shaft 11 at a predetermined contact angle α.

The contact angle α means an angle formed between a tangent to the circle D at the contact portion 57 (58) and a tangent E to the corresponding axial groove 32, 34, 36.

In other words, at the contact portion 57 (58), the contact angle α is equivalent to an angle between a load line γ of a force (vertical reaction force γ) exerted on the arcuate surface 54 from the corresponding axial groove 32, 34, 36 and a phantom plane F. The phantom plane F includes the axis B of the outer shaft 11 and passes through the contact portion 57 (58). The value of the above-described contact angle α is preferably set in the range of 30° to 60° or more preferably set in the range of 40° to 50°.

Referring to FIG.5, when torque is exerted between the inner shaft 10 and the outer shaft 11, the resin rods 41, 42, 43 each function as a U-shaped spring acting against an input force from the contact portions 57, 56 or the contact portions 55, 58.

As seen in the longitudinal direction L (direction perpendicular to the sheet surface of FIG.5), a center W of each resin rod 41, 42, 43 exists on or in the vicinity of a pitch circle X of the male serration portion 27 and the female serration portion 29 (the center W is on the pitch circle X in this embodiment). This prevents each of the resin rods 41, 42, 43 from significantly sliding at the above contact portions 55 to 58 relative to the corresponding inner shaft 10 and outer shaft 11. When the torque is exerted between the inner shaft 10 and the outer shaft 11, the resin rods 41, 42, 43 each receive load from the above-described contact portions 57, 56 or contact portions 55, 58.

Referring to FIG.2 and FIG. 3, axes A, B of the respective inner shaft 10 and outer shaft 11 are aligned with each other. The respective lengths of the resin rods 41, 42, 43 in the longitudinal direction L (hereinafter simply referred to as "the length") are equal to one another.

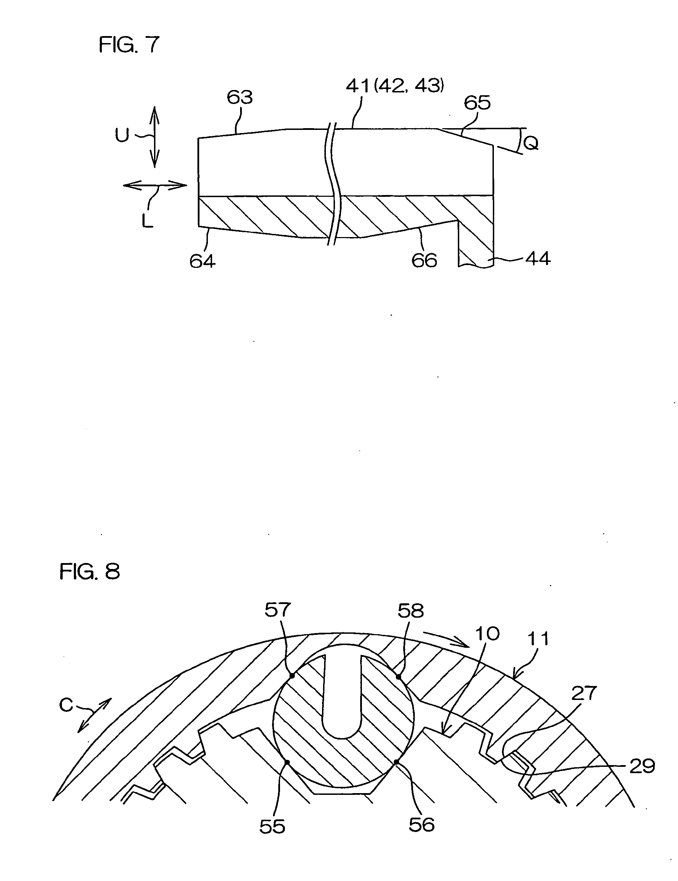

Referring to FIG.7, each of the resin rods 41, 42, 43 is formed with chamfers 63, 64, 65, 66 at its proximal end and distal end in the longitudinal direction L. On the distal end of each resin rod 41, 42, 43, an outside end in the radial direction U is formed with the chamfer 63, which defines a smooth slant surface. On the distal end of each resin rod 41, 42, 43, an inside end in the radial direction U is formed with the chamfer 64, which defines a smooth slant surface.

On the proximal end of each resin rod 41, 42, 43, an outside end in the radial direction U is formed with the chamfer 65, which defines a smooth slant surface. On the proximal end of each resin rod 41, 42, 43, an inside end in the radial direction U is formed with the chamfer 66, which defines a smooth slant surface.

Referring to FIG.3 and FIG.7, the above-described configuration makes the respective resin rods 41, 42, 43 less prone to be caught in the corresponding axial grooves 31 , 32 ; 33 , 34 ; 35 , 36 when the resin rods are inserted between the corresponding axial groove pairs 31, 32 ; 33, 34 ; 35, 36, or when the resin rods are slidably moved relative to the corresponding axial grooves 32, 34, 36 of the outer shaft 11.

Each of the above-described chamfers 63 to 66 has, for example, a predetermined angle Q of inclination to the corresponding longitudinal direction L. Crowning portions may be formed in place of these chamfers 63 to 66. In this case, the crowning portion is formed in, for example, a curved surface having a predetermined radius of curvature.

Referring to FIG.3 and FIG.4, the above-described configuration is made such that when a steering angle θ of the steering member is in the range of -θ1≤θ≤θ1 (θ1 denotes a predetermined steering angle on the order of several minutes, for example), a relative phase of these shafts 10, 11 is in a predetermined range. When the steering angle θ is zero, the steering member is at a neutral steering position. The steering angle θ has a positive value with respect to one side of the circumferential direction C and a negative value with respect to the other side of the circumferential direction C.

When the relative phase of these shafts 10, 11 is in the predetermined range, both the shafts 10, 11 are in elastically supported relation to each other by means of the resin rods 41, 42, 43. Namely, these shafts 10, 11 are floatingly supported by the resin rods 41, 42, 43 without contacting with each other.

At this time, the male serration portion 27 of the inner shaft 10 and the female serration portion 29 of the outer shaft 11 are not meshed with each other. The resin rods 41, 42, 43 elastically connect these shafts 10, 11 in the circumferential direction C. Further, the resin rods 41, 42, 43 are elastically deformed by being compressed between the inner shaft 10 and the outer shaft 11.

Thus, gaps between the inner shaft 10 and the outer shaft 11 in the circumferential direction C are filled by the corresponding resin rods 41, 42, 43. Referring to FIG.6, a torque T exerted between the both shafts 10, 11 acts in directions of the tangents to the circle D at the contact portions 57, 58, imparting resistance to relative rotation between the inner shaft 10 and the outer shaft 11.

Referring to FIG.5, when the steering angle θ of the steering member is -θ1≤θ≤θ1, a predetermined gap J is provided between the serration portions 27, 29 in the circumferential direction C of the inner shaft 10. Thus, the male serration portion 27 and the female serration portion 29 are out of meshing engagement when the steering angle θ is -θ1≤θ≤θ1.

As the absolute value of the steering angle θ increases in conjunction with the steering operation of the steering member, the resin rods 41, 42, 43 are compressed in the circumferential direction C of the inner shaft 10 and elastically deformed. According to each elastic deformation of the resin rods, the gap J between the serration portions 27, 29 is decreased.

The relative phase of both the shafts 10, 11 exceeds the predetermined range when the steering angle becomes θ<-θ1 or to θ1<θ. Thus the gap is eliminated between the serration portions 27, 29, so that the male serration portion 27 is meshed with the female serration portion 29, as shown in FIG. 8, for example. This enables the inner and outer shafts 10, 11 to transmit the torque to each other through the serration portions 27, 29.

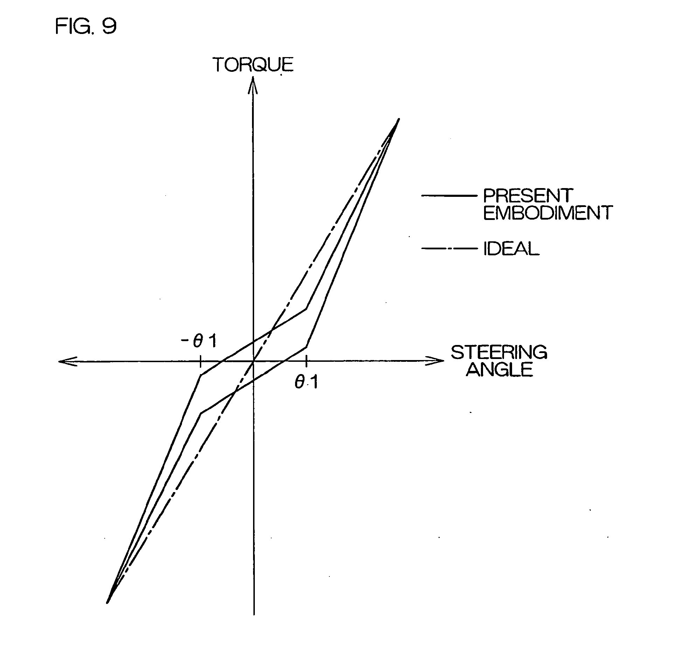

A relation between the steering angle θ and the torque of the steering member is that shown in FIG. 9. As shown in FIG.9, the embodiment can provide a generally linear relation between the steering angle θ and the torque exerted on the steering shaft 3. In consequence, the relation can be approximated to an ideal relation indicated by a dot-dash line in Fig. 9.

As the absolute value of the steering angle θ is increased from zero, therefore, the torque is increased generally linearly. Accordingly, the steering system can provide a natural steering feeling. The steering system does not exhibit, for example, a characteristic that the torque is generally at zero when the steering angle θ is in the range of -θ1≤θ≤θ1 whereas the torque is abruptly increased when the steering angle becomes θ<-θ1 or θ1<θ. As a result, unstable steering in the vicinity of the neutral steering position can be avoided.

The embodiment can offer the following operations and effects. Specifically, the groove 50 of each resin rod 41, 42, 43 has the U-shaped section opening toward the outside in the radial direction U of the inner shaft 10. When the resin rods 41, 42, 43 are formed, after the resin body 39 is formed by injecting a molten resin into a mold, parts of the mold which are located inside the respective grooves 50 can be smoothly extracted from the corresponding resin rods 41, 42, 43 in the radial direction U thereof. It is therefore unnecessary to forcibly extract the mold parts from the respective resin rods 41, 42, 43.

Hence, the respective resin rods 41, 42, 43 released from the mold are prevented from being plastically deformed to expand radially. As a result, the frictional resistance between the inner shaft 10 and the outer shaft 11 connected through the resin rods 41, 42, 43 are not increased.

A smooth relative sliding movement between the inner shaft 10 and the outer shaft 11 connected through the resin rods 41, 42, 43 each having a lower frictional resistance than metal can be achieved. Since these shafts 10, 11 are dramatically reduced in sliding resistance when they are slidably moved relative to each other in the axial direction S, the inner and outer shafts 10, 11 can be brought into relative sliding movement with a small force for telescopic adjustment or the like.

Furthermore, the gaps between the inner shaft 10 and the outer shaft 11 in the circumferential direction C can be filled by the resin rods 41, 42, 43. Even when the steering angle θ is in the range of -θ1≤θ≤θ1 (when the relative phase of the inner shaft 10 and the outer shaft 11 is in the predetermined range), therefore, the connection of the inner and outer shafts 10, 11 through the resin rods 41, 42, 43 has high rigidity in the circumferential direction C. Therefore, the inner and outer shafts 10, 11 can be brought into rotation in synchronism without delay in rotation transmission between these shafts 10, 11. Thus the rigid feeling of the connection of the inner shaft 10 and the outer shaft 11 in the circumferential direction C is ensured, so that the good steering feeling is provided.

At least one of the resin rods 41, 42, 43 can be elastically deformed by being sufficiently compressed between the inner and outer shafts 10, 11. Thus, the connection of the inner and outer shafts 10, 11 through the resin rods 41, 42, 43 is further increased in the rigidity in the circumferential direction C even when the steering angle θ is in the range of -θ1≤θ≤θ1 (when the relative phase of the inner shaft 10 and the outer shaft 11 is in the predetermined range).

In addition, the resin rods 41, 42, 43 can be formed from a synthetic resin which is relatively easy to mold. This leads to an increased yield of the resin rods 41, 42, 43 (the resin body 39), so that the manufacture cost is decreased. The resin rods 41, 42, 43 may be formed in one piece, which results in the reduced number of components and the reduced manufacture cost.

The groove 50 is formed in each of the resin rods 41, 42, 43, so that the resin rods 41, 42, 43 are each reduced in the area of contact with the inner and outer shafts 10, 11. As a result, sliding load on the inner and outer shafts 10, 11 during the relative sliding movement is reduced further.

The connecting portion 44 is fixed to the one end of the inner shaft 10. This makes it possible to collectively bring the resin rods 41, 42, 43 into contact with the inner shaft 10 and the outer shaft 11 when the resin rods 41, 42, 43 are press-inserted between the inner shaft 10 and the outer shaft 11. Therefore, the number of steps to assemble the respective resin rods 41, 42, 43 to the inner shaft 10 is reduced. Furthermore, the respective resin rods 41, 42, 43 can be positioned to the inner shaft 10.

The connecting portion 44 is also capable of preventing the respective resin rods 41, 42, 43 from rotating on their axes in spaces between the corresponding axial groove pairs 31,32; 33,34; 35,36. Hence, the inner shaft 10 and the outer shaft 11 are prevented from undergoing unwanted change of torsional rigidity therebetween when the relative phase of the inner and outer shafts 10, 11 is in the predetermined range. Accordingly, rattling feeling during the steering operation can be prevented even when the steering angle θ is small.

The arcuate surface 54 of each resin rod 41, 42, 43 is in linear contact with each corresponding axial groove 32, 34, 36 of the outer shaft 11 at the predetermined contact angle α. Thus, sliding friction (surface pressure) between each resin rod 41, 42, 43 and each corresponding axial groove 32, 34, 36 is reduced as much as possible. Accordingly, the wear of the resin rods 41, 42, 43 is assuredly suppressed.

When the steering angle θ is -θ1≤θ≤θ1, the resin rods 41, 42, 43 elastically connect the inner and outer shafts 10, 11 in the circumferential direction C. Even when the steering angle θ is -θ1≤θ≤θ1, therefore, the steering of the steering member 2 can bring about a reaction torque as a reaction force equal to an input torque according to the steering angle θ. As a result, the driver is prevented from steering insufficiently or excessively, so that the unstable steering by the driver is prevented.

Since some steering reaction force is produced before the steering angle θ reaches θ < -θ1 or θ1<θ, an abrupt change of the transmitted torque before or after the steering angle θ reaches θ<-θ1 or θ1<θ is obviated. Hence, the reaction torque as the reaction equivalent to the input torque is increased smoothly. Accordingly, the motor vehicle steering system 1 does not transmit unwanted torque change to the driver but gives only information necessary for the driver such as road surface conditions and vehicle behaviors. As a result, the unstable steering does not occur in the vicinity of the neutral steering position having the steering angle θ of zero. Therefore, the motor vehicle steering system 1 can give an enhanced stable feeling which is perceived through the steering member 2.

When the steering member 2 is abruptly turned from the neutral steering position, the resin rods 41, 42, 43 between the inner shaft 10 and the outer shaft 11 are compressed while the male serration portion 27 of the inner shaft 10 comes into contact with the female serration portion 29 of the outer shaft 11. At this time, the resin rods 41, 42, 43 exhibit a buffering action to reduce impact on the serration portions 27, 29 when making contact with each other. This results in the suppression of contact noises.

As described above, the motor vehicle steering system 1 can be provided which permits the resin rods 41 to 43 to be formed without forcibly extracting the mold parts therefrom, which secures the rigid connection of the inner shaft 10 and the outer shaft 11 even when the steering member is at the neutral steering position, thereby providing the good steering feeling, which permits the inner shaft 10 and the outer shaft 11 to bring into the smooth relative sliding movement with a small force, and which requires a low manufacture cost.

The invention is not limited to the contents of the foregoing embodiment, and various changes and modifications may be made thereto within the scope of the claims thereof.

The following description mainly focuses on differences from the foregoing embodiment shown in FIG.1 to FIG.9. Like reference characters refer to like components, and the description thereof is omitted.

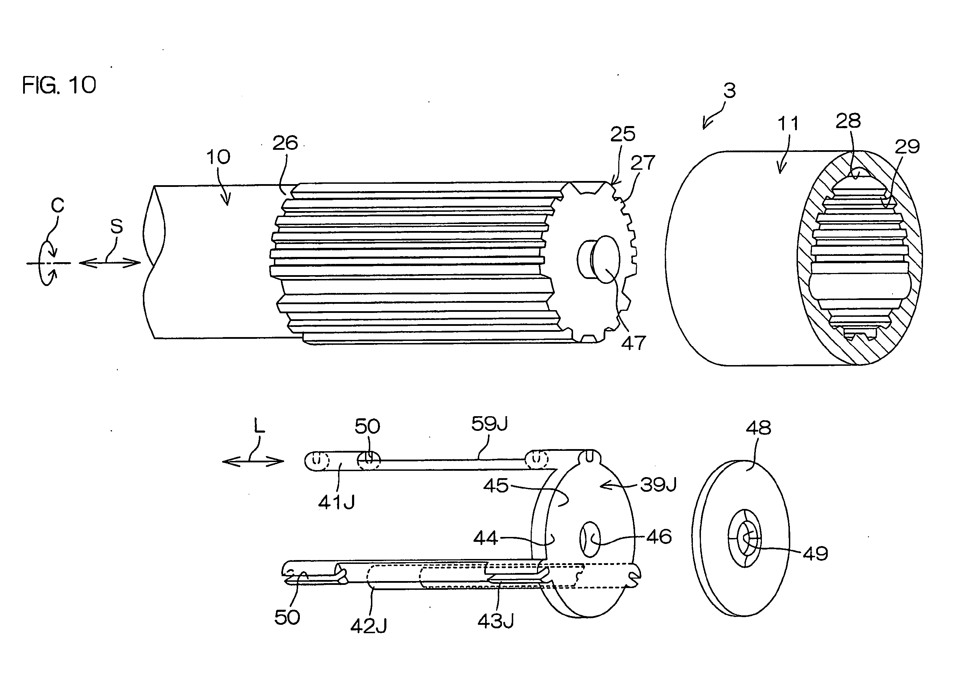

For instance, a resin body 39J shown in FIG. 10 may be used. The resin body 39J includes three resin rods 41J, 42J, 43J and the connecting portion 44 interconnecting these resin rods 41J, 42J, 43J.

The resin rods 41J, 42J, 43J have an equal length in the longitudinal direction L. Each of the resin rods 41J, 42J, 43J is formed with a cutout portion 59J at an intermediate part thereof in the longitudinal direction L. The cutout portion 59J is formed at the intermediate part of each resin rod 41J, 42J, 43J with respect to the longitudinal direction L. The cutout portion 59J is opened toward neither the proximal end nor the distal end of the corresponding resin rod 41J, 42J, 43J.

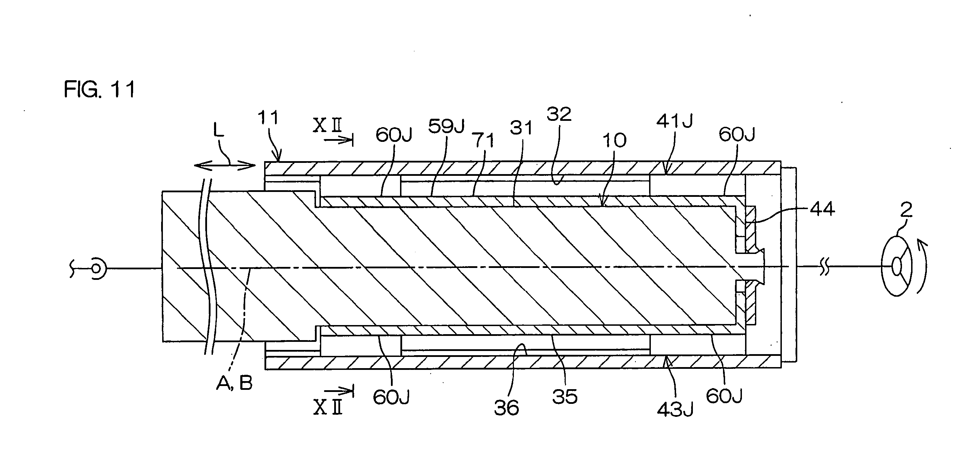

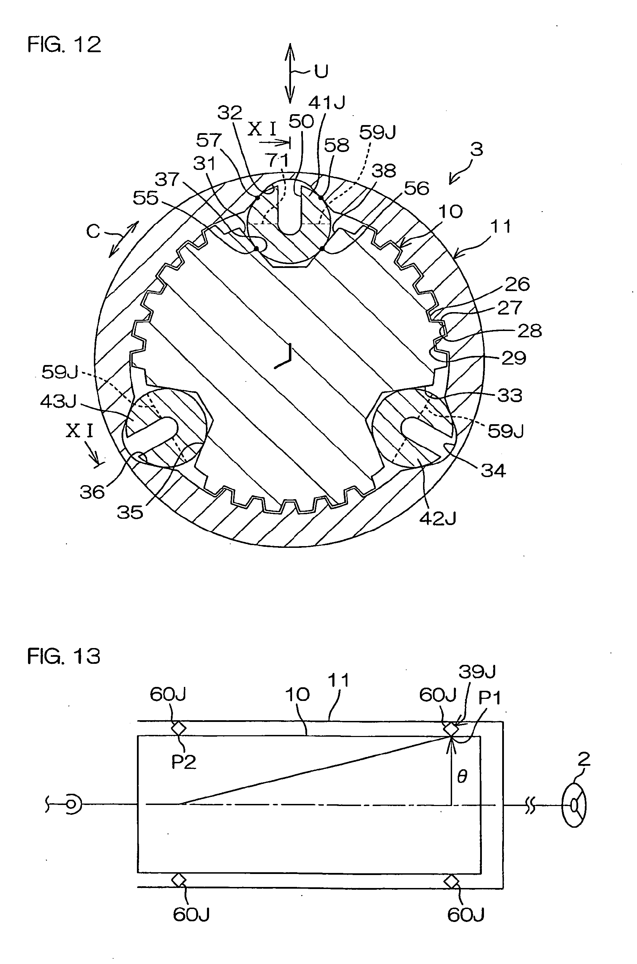

Referring to FIG.11 and FIG.12, the cutout portion 59J is defined by forming a recess 71 at a part of an outside portion of the resin rod 41J, 42J, 43J in the radial direction U of the inner shaft 10. The cutout portion 59J is formed with only the contact portions 55, 56 out of the contact portions 55, 56, 57, 58. The cutout portion 59J defines a one-side abutment portion abutting against only the inner shaft 10 out of the inner shaft 10 and the outer shaft 11. Each cutout portion 59J is so formed as not to make contact with the outer shaft 11. The cutout portion 59J may also be formed with only the contact portions 57, 58 out of the contact portions 55, 56, 57, 58.

A both-side abutment portion 60J is formed at each of the paired opposite ends of each resin rod 41J, 42J, 43J in the longitudinal direction L. Each both-side abutment portion 60J is in contact with both the inner shaft 10 and the outer shaft 11. Each both-side abutment portion 60J is formed with the above-described contact portions 55, 56, 57, 58.

The respective resin rods 41J, 42J, 43J are press-inserted between the corresponding axial groove pairs 31 , 32 ; 33 , 34 ; 35 , 36 of the inner shaft 10 and the outer shaft 11. The resin rods 41J, 42J, 43J are elastically deformed by being compressed by these inner shaft 10 and the outer shaft 11.

According to the above-described configuration, the resin rods 41J, 42J, 43J are each in contact with each corresponding axial groove 32, 34, 36 of the outer shaft 11 at two places spaced away in the longitudinal direction L. Thus, the paired both-side abutment portions 60J of each resin rod 41J, 42J, 43J elastically support the inner shaft 10 and the outer shaft 11 at two places in the longitudinal direction L. The three resin rods 41J, 42J, 43J are disposed at regular intervals in the circumferential direction C of the inner shaft 10. Accordingly, when the relative phase of the inner shaft 10 and the outer shaft 11 with respect to the circumferential direction C is in the predetermined range, the inner shaft 10 and the outer shaft 11 are floatingly supported by these three resin rods 41J, 42J, 43J without making direct contact with each other.

FIG. 13 is a schematic diagram of the principal part for explaining an action in a case where the resin body 39J is used. Referring to FIG. 13, when the torque is inputted from the steering member 2, the inner shaft 10 is twisted first at a place P1 in contact with each of the both-side abutment portions 60J closer to the steering member 2. Subsequently, the inner shaft 10 is twisted at a place P2 in contact with each of the both-side abutment portions 60J farther from the steering member 2.

As shown in FIG. 11 and FIG.12, the inner shaft 10 and the outer shaft 11 are each supported at the two places in the longitudinal direction L by means of the both-side abutment portions 60J of the respective resin rods 41J, 42J, 43J. This prevents the above-described twisting motion from causing pry between the inner and outer shafts 10, 11. The resin rods 41J, 42J, 43J are connected by the connecting portion 44, whereby the both-side abutment portions 60J in contact with the above-described places P2 (FIG.13) are prevented from being displaced by the resin rods rotating on their axes during the torque transmission. As a result, the steering system is capable of giving the good rigid feeling to the driver when the steering quantity of the steering member is in a minor steering zone where the steering quantity is small or when the relative phase of the inner shaft 10 and the outer shaft 11 is in the predetermined range.

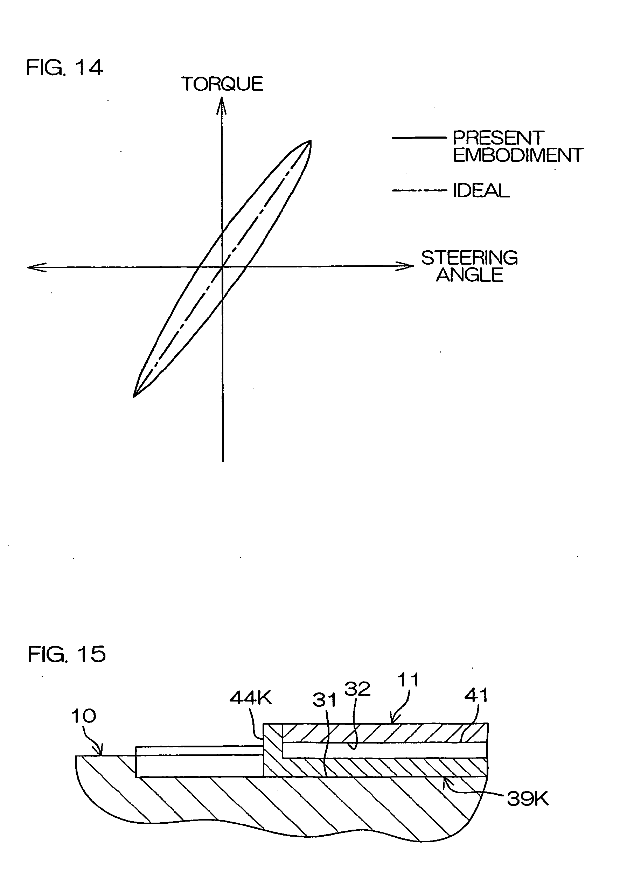

In this case, a relation between the steering angle of the steering member 2 and the torque exerted on the steering member 2 is that shown by a solid line in FIG.14, and is approximated to an ideal linear relation.

Each of the resin rods 41J, 42J, 43J is decreased in the area of contact with the inner and outer shafts 10, 11 by providing the cutout portion 59J. As a result, the sliding resistance between the inner shaft 10 and the outer shaft 11 are further decreased when they slidably move relative to each other. Accordingly, the telescopic adjustment is smoothly accomplished with a smaller force. In addition, the sliding resistance can be set to a desired value by appropriately setting the length or the like of the cutout portion 59J.

Each of the resin rods 41J, 42J, 43J supports the inner shaft 10 and the outer shaft 11 at the two places spaced away in the longitudinal direction L. Thus, the inner shaft 10 and the outer shaft 11 are prevented from rattling during the relative sliding movement.

With respect to the longitudinal direction L, the length (support span) over which each of the resin rods 41J, 42J, 43J supports the corresponding outer shaft 11 can be made equal to that of the resin rod without the cutout portion 59J. This ensures that the outer shaft 11 is elastically supported in a reliable manner.

As shown in FIG. 15 , a resin body 39K including a connecting portion 44K fixed to the outer shaft 11 is also usable. The connecting portion 44K is shaped like an annular ring and fixed to the one end face of the outer shaft 11. The respective resin rods (FIG.15 showing only one resin rod 41) extend from the connecting portion 44K toward the one end of the inner shaft 10.

Alternatively, each of the foregoing embodiments may also employ separate resin rods which are not connected by the connecting portion.

Further, a spline coupling structure may also be provided in place of the serrated coupling structure 25. In this case, a male spline portion of the spline coupling structure is formed on the outer periphery 26 of the inner shaft 10 and a female spline portion is formed on the inner periphery 28 of the outer shaft 11.

The inner shaft 10 and the outer shaft 11 may be formed with four or more pairs of axial grooves in opposing relation.

The invention is applicable to power steering apparatuses such as an electric power steering apparatus which employs an electric motor for imparting a steering assist force to the steering shaft, and a hydraulic power steering apparatus which employs a hydraulic cylinder for imparting the steering assist force to the rack shaft.

In this case, the absolute value of the steering angle θ from which the application of the steering assist force is started is set to a value corresponding to the above predetermined steering angle θ1. That is, a zone where the steering angle θ is in the range of -θ1≤θ≤θ1 is set to be a so-called dead zone where the steering assists force is not generated although the steering member 2 is steered. When the steering angle is so small that the steering assist force is not imparted (dead zone), the torque transmission between the inner shaft 10 and the outer shaft 11 is carried out through the resin rods alone.

The invention is also applicable to the intermediate shaft interposed between the steering member and the steering mechanism.

While the invention has been described in greater details by way the specific examples thereof, it is apparent that changes, modifications and equivalents thereof will occur to those skilled in the art who have understood the above contents. The scope of the invention, therefore, is to be construed to be defined by the appended claims.

## Claims

1. A telescopic vehicle steering shaft (3) rotated according to steering of a steering member (2) comprising:
an inner shaft (10) and a tubular outer shaft (11) fitted with each other in a manner to be capable of relatively sliding in an axial direction (S) and of transmitting a torque;
at least three pairs of axial grooves (31, 32, 33, 34, 35, 36) formed on an outer periphery (26) of the inner shaft (10) and an inner periphery (28) of the outer shaft (11) and extending in the axial direction (S) to be opposed to each other;
a rigid coupling structure (25) for rigidly connecting the inner shaft (10) and the outer shaft (11) in a circumferential direction (C) of the inner shaft (10) when a relative position of the inner shaft (10) against the outer shaft (11) with respect to the circumferential direction (C) exceeds a predetermined range; and
a plurality of elongate rods (41, 42, 43; 41J, 42J, 43J) as elastic coupling elements (41, 42, 43; 41J, 42J, 43J) for elastically connecting the inner shaft (10) and the outer shaft (11) in the circumferential direction (C) when the relative position is in the predetermined range,
wherein each of the plurality of rods (41, 42, 43; 41J, 42J, 43J) is interposed between the mutually corresponding axial grooves (31, 32, 33, 34, 35, 36) of the inner shaft (10) and the outer shaft (11), **characterized in that**
each of the plurality of rods (41, 42, 43; 41J, 42J, 43J) is formed from a resin and includes a groove (50) extending in a longitudinal direction (L) of the plurality of resin rods (41, 42, 43; 41J, 42J, 43J), and
wherein a section of the groove (50) has a U shape opening toward an outside in a radial direction (U) of the inner shaft (10).

2. A telescopic vehicle steering shaft (3) according to Claim 1, wherein the groove (50) includes a bottom portion (51) including an arcuate surface (51a) and a pair of wall portions (52, 53) opposed to each other in parallel relation with the bottom portion (51) sandwiched therebetween.

3. A telescopic vehicle steering shaft (3) according to Claim 1 or 2,
wherein the outer periphery (26) of each of the plurality of resin rods (41, 42, 43; 41J, 42J, 43J) includes an arcuate surface (54) continuous with the groove (50), and
wherein the arcuate surface (54) includes contact portions (55, 56, 57, 58) in contact with the corresponding outer periphery (26) and inner periphery (28) of the inner shaft (10) and the outer shaft (11).

4. A telescopic vehicle steering shaft (3) according to any of Claims 1-3,
wherein each of the plurality of resin rods (41, 42, 43; 41J, 42J, 43J) is formed with chamfers (63, 64, 65, 66) at each of a pair of ends thereof.

5. A telescopic vehicle steering shaft (3) according to any of Claims 1-4,
wherein the inner shaft (10) and the outer shaft (11) are floatingly supported by the plurality of resin rods (41, 42, 43; 41J, 42J, 43J) without contacting with each other when the relative phase is in the predetermined range.

6. A telescopic vehicle steering shaft (3) according to any of Claims 1-5, further comprising a connecting portion (44; 44K) fixed to one end of either the inner shaft (10) or the outer shaft (11) and connecting the plurality of resin rods (41, 42, 43; 41J, 42J, 43J) with one another.

7. A telescopic vehicle steering shaft (3) according to any of Claims 1-6,
wherein the telescopic shaft for steering vehicle (3) includes a steering shaft (3) connected to the steering member (2).

8. A telescopic vehicle steering shaft (3) according to any one of Claims 1 to 7,
wherein the rigid coupling structure (25) is a serrated coupling structure (25),
wherein the serrated coupling structure (25) includes a male serration portion (27) and a female serration portion (29) capable of meshing with each other,
wherein the male serration portion (27) is provided on the outer periphery (26) of the inner shaft (10), and
wherein the female serration portion (29) is provided on the inner periphery (28) of the outer shaft (11).

9. A telescopic vehicle steering shaft (3) according to Claim 8, wherein as viewing the respective resin rods (41, 42, 43; 41J, 42J, 43J) in the longitudinal direction (L), respective centers (W) of the plurality of resin rods (41, 42, 43; 41J, 42J, 43J) are located on a pitch circle (X) of the male serration portion (27).

10. A telescopic vehicle steering shaft (3) according to any one of Claims 1 to 9, wherein at least one of the plurality of resin rods (41, 42, 43; 41J, 42J, 43J) is formed with a cutout portion (59J).

11. A telescopic vehicle steering shaft (3) according to Claim 10, wherein the cutout portion (59J) is in contact only with either the inner shaft (10) or the outer shaft (11).

12. A motor vehicle steering system (1), comprising a telescopic vehicle steering shaft according to Claim 1.

## Patentansprüche

1. Teleskopische Fahrzeuglenkungswelle (3), die gemäß einer Lenkung eines Lenkungselements (2) rotiert ist, mit:
einer Innenwelle (10) und einer rohrförmigen Außenwelle (11), die aufeinander in einer Weise angepasst sind, dass sie dazu in der Lage sind, relativ zueinander in einer axialen Richtung (S) zu gleiten und ein Moment zu übertragen;
mindestens drei Paaren von axialen Nuten (31, 32, 33, 34, 35, 36), die an einem Außenumfang (26) der Innenwelle (10) und an einem Innenumfang (28) der Außenwelle (11) ausgebildet sind und sich in die axiale Richtung (S) erstrecken, um einander gegenüberzuliegen;
einer festen Kupplungsstruktur (25) zum festen Verbinden der Innenwelle (10) und der Außenwelle (11) in einer Umfangsrichtung (C) der Innenwelle (10), wenn eine Relativposition der Innenwelle (10) gegen die Außenwelle (11) mit Bezug auf die Umfangsrichtung (C) einen vorbestimmten Bereich überschreitet; und
einer Mehrzahl von länglichen Stäben (41, 42, 43; 41J, 42J, 43J) als elastische Kupplungselemente (41, 42, 43; 41J, 42J, 43J) zum elastischen Verbinden der Innenwelle (10) und der Außenwelle (11) in der Umfangsrichtung (C), wenn die Relativposition in dem vorbestimmten Bereich ist,
wobei die Mehrzahl von Stäben (41, 42, 43; 41J, 42J, 43J) zwischen die sich gegenseitig entsprechenden axialen Nuten (31, 32, 33, 34, 35, 36) der Innenwelle (10) und der Außenwelle (11) eingeschoben ist, **dadurch gekennzeichnet, dass**
jeder der Mehrzahl von Stäben (41, 42, 43; 41J, 42J, 43J) aus einem Harz gebildet ist und eine Nut (50) aufweist, die sich in einer Längsrichtung (L) der Mehrzahl von Harzstäben (41, 42, 43; 41J, 42J, 43J) erstreckt, und
wobei ein Abschnitt der Nut (50) eine U-Form aufweist, die sich in einer radialen Richtung (U) der Innenwelle (10) nach außen öffnet.

2. Teleskopische Fahrzeuglenkungswelle (3) nach Anspruch 1, wobei die Nut (50) einen Bodenabschnitt (51) aufweist, der eine bogenförmige Oberfläche (51a) und ein Paar von Wandabschnitten (52, 53) aufweist, die parallel einander gegenüberliegen,
wobei der Bodenabschnitt (51) zwischen ihnen eingeschlossen ist.

3. Teleskopische Fahrzeuglenkungswelle (3) nach Anspruch 1 oder 2,
wobei der Außenumfang (26) jedes der Mehrzahl von Harzstäben (41, 42, 43; 41J, 42J, 43J) eine bogenförmige Oberfläche (54) aufweist, die die Nut (50) durchgängig aufweist, und
wobei die bogenförmige Oberfläche (54) Kontaktabschnitte (55, 56, 57, 58) aufweist, die in Kontakt mit dem entsprechenden Außenumfang (26) und Innenumfang (28) der Innenwelle (10) und der Außenwelle (11) stehen.

4. Teleskopische Fahrzeuglenkungswelle (3) nach einem der Ansprüche 1 bis 3,
wobei jeder der Mehrzahl von Harzstäben (41, 42, 43; 41J, 42J, 43J) mit einer Fase (63, 64, 65, 66) an jedem eines Paars von Enden von sich ausgebildet ist.

5. Teleskopische Fahrzeuglenkungswelle (3) nach einem der Ansprüche 1 bis 4,
wobei die Innenwelle (10) und die Außenwelle (11) schwimmend durch die Mehrzahl von Harzstäben (41, 42, 43; 41J, 42J, 43J) ohne einander zu berühren gestützt sind, wenn die relative Phase in dem vorbestimmten Bereich liegt.

6. Teleskopische Fahrzeuglenkungswelle (3) nach einem der Ansprüche 1 bis 5, des Weiteren mit einem Verbindungsabschnitt (44; 44K), der an einem Ende entweder der Innenwelle (10) oder der Außenwelle (11) befestigt ist und die Mehrzahl von Harzstäben (41, 42, 43; 41J, 42J, 43J) miteinander verbindet.

7. Teleskopische Fahrzeuglenkungswelle (3) nach einem der Ansprüche 1 bis 6,
wobei die teleskopische Fahrzeuglenkungswelle (3) eine Lenkungswelle (3) aufweist, die mit dem Lenkungselement (2) verbunden ist.

8. Teleskopische Fahrzeuglenkungswelle (3) nach einem der Ansprüche 1 bis 7,
wobei die feste Kupplungsstruktur (25) eine geriffelte Kupplungsstruktur (25) ist,
wobei die geriffelte Kupplungsstruktur (25) einen Außenriffelungsabschnitt (27) und einen Innenriffelungsabschnitt (29) aufweist, die dazu in der Lage sind, ineinander zu greifen,
wobei der Außenriffelungsabschnitt (27) an dem Außenumfang (26) der Innenwelle (10) bereitgestellt ist, und
wobei der Innenriffelungsabschnitt (29) an dem Innenumfang (28) der Außenwelle (11) bereitgestellt ist.

9. Teleskopische Fahrzeuglenkungswelle (3) nach Anspruch 8, wobei, wenn man die entsprechenden Harzstäbe (41, 42, 43; 41J, 42J, 43J) in der Längsrichtung (L) betrachtet, entsprechende Mittelpunkte (W) der Mehrzahl von Harzstäben (41, 42, 43; 41J, 42J, 43J) auf einem Wälzkreis (X) des Außenriffelungsabschnitts (27) angeordnet sind.

10. Teleskopische Fahrzeuglenkungswelle (3) nach einem der Ansprüche 1 bis 9,
wobei zumindest einer der Mehrzahl von Harzstäben (41, 42, 43; 41J, 42J, 43J) mit einem ausgesparten Abschnitt (59J) ausgebildet ist.

11. Teleskopische Fahrzeuglenkungswelle (3) nach Anspruch 10, wobei der ausgesparte Abschnitt (59J) nur entweder mit der Innenwelle (10) oder mit der Außenwelle (11) in Kontakt ist.

12. Kraftfahrzeuglenkungssystem (1) mit einer teleskopischen Fahrzeuglenkungswelle nach Anspruch 1.

## Revendications

1. Arbre télescopique de direction de véhicule (3) entraîné en rotation en fonction du braquage d'un élément de direction (2) comportant :
un arbre intérieur (10) et un arbre extérieur tubulaire (11) montés l'un dans l'autre de manière à être capables de coulisser de manière relative dans une direction axiale (S) et de transmettre un couple ;
au moins trois paires de rainures axiales (31, 32, 33, 34, 35, 36) formées sur une périphérie extérieure (26) de l'arbre intérieur (10) et une périphérie intérieure (28) de l'arbre extérieur (11) et s'étendant dans la direction axiale (S) afin d'être opposées l'une à l'autre ;
une structure d'accouplement rigide (25) destinée à relier rigidement l'arbre intérieur (10) et l'arbre extérieur (11) dans une direction circonférentielle (C) de l'arbre intérieur (10) quand une position relative de l'arbre intérieur (10) contre l'arbre extérieur (11) par rapport à la direction circonférentielle (C) dépasse une plage prédéterminée ; et
une multiplicité de tiges allongées (41, 42, 43 ; 41J, 42J, 43J) en tant qu'éléments d'accouplement élastiques (41, 42, 43 ; 41J, 42J, 43J) destinées à relier de manière élastique l'arbre intérieur (10) et l'arbre extérieur (11) dans la direction circonférentielle (C) quand la position relative est dans la plage prédéterminée,
chaque tige de la multiplicité de tiges (41, 42, 43 ; 41J, 42J, 43J) étant interposée entre les rainures axiales mutuellement correspondantes (31, 32, 33, 34, 35, 36) de l'arbre intérieur (10) et de l'arbre extérieur (11),
**caractérisé en ce que**
chaque tige de la multiplicité de tiges (41, 42, 43 ; 41J, 42J, 43J) est formée en résine et comprend une rainure (50) s'étendant dans une direction longitudinale (L) de la multiplicité de tiges en résine (41, 42, 43 ; 41J, 42J, 43J), et
une section de la rainure (50) ayant une ouverture en forme de U vers un extérieur dans une direction radiale (U) de l'arbre intérieur (10).

2. Arbre télescopique de direction de véhicule (3) selon la revendication 1, dans lequel la rainure (50) comprend une partie inférieure (51) comprenant une surface courbe (51a) et une paire de parties de paroi (52, 53) opposées l'une à l'autre en relation parallèle avec la partie inférieure (51) enserrée entre elles.

3. Arbre télescopique de direction de véhicule (3) selon la revendication 1 ou 2, dans lequel la périphérie extérieure (26) de chaque tige de la multiplicité de tiges en résine (41, 42, 43 ; 41J, 42J, 43J) comprend une surface courbe (54) dans la continuité de la rainure (50), et
la surface courbe (54) comprend des parties de contact (55, 56, 57, 58) en contact avec la périphérie extérieure (26) et la périphérie intérieure (28) correspondantes de l'arbre intérieur (10) et de l'arbre extérieur (11).

4. Arbre télescopique de direction de véhicule (3) selon l'une quelconque des revendications 1 à 3, dans lequel chaque tige de la multiplicité de tiges en résine (41, 42, 43 ; 41J, 42J, 43J) est formée avec des chanfreins (63, 64, 65, 66) au niveau de chaque extrémité d'une paire d'extrémités.

5. Arbre télescopique de direction de véhicule (3) selon l'une quelconque des revendications 1 à 4, dans lequel l'arbre intérieur (10) et l'arbre extérieur (11) sont supportés de manière flottante par la multiplicité de tiges en résine (41, 42, 43 ; 41J, 42J, 43J) sans entrer en contact l'un avec l'autre quand la phase relative est dans la plage prédéterminée.

6. Arbre télescopique de direction de véhicule (3) selon l'une quelconque des revendications 1 à 5, comportant en outre une partie de raccordement (44 ; 44K) fixée à une extrémité de l'arbre intérieur (10) ou de l'arbre extérieur (11) et raccordant les tiges de la multiplicité de tiges en résine (41, 42, 43 ; 41J, 42J, 43J) l'une à l'autre.

7. Arbre télescopique de direction de véhicule (3) selon l'une quelconque des revendications 1 à 6, dans lequel l'arbre télescopique de direction de véhicule (3) comprend un arbre de direction (3) relié à l'élément de direction (2).

8. Arbre télescopique de direction de véhicule (3) selon l'une quelconque des revendications 1 à 7, dans lequel la structure d'accouplement rigide (25) est une structure d'accouplement cannelée (25),
la structure d'accouplement cannelée (25) comprend une partie cannelée mâle et une partie cannelée femelle (29) capables d'être en prise l'une avec l'autre,
la partie cannelée mâle (27) est prévue sur la périphérie extérieure (26) de l'arbre intérieur (10), et
la partie cannelée femelle (29) est prévue sur la périphérie intérieure de l'arbre extérieur (11).

9. Arbre télescopique de direction de véhicule (3) selon la revendication 8, dans lequel, lorsque l'on regarde les tiges en résine respectives (41, 42, 43 ; 41J, 42J, 43J) dans la direction longitudinale (L), des centres respectifs (w) de la multiplicité de tiges en résine (41, 42, 43 ; 41J, 42J, 43J) se trouvent sur un cercle primitif (X) de la partie cannelée mâle (27).

10. Arbre télescopique de direction de véhicule (3) selon l'une quelconque des revendications 1 à 9, dans lequel au moins une tige de la multiplicité de tiges en résine (41, 42, 43 ; 41J, 42J, 43J) est formée avec une partie découpée (59J).

11. Arbre télescopique de direction de véhicule (3) selon la revendication 10, dans lequel la partie découpée (59J) est en contact seulement avec l'arbre intérieur (10) ou l'arbre extérieur (11).

12. Système de direction de véhicule à moteur (1), comportant un arbre télescopique de direction de véhicule selon la revendication 1.
